# EUROPEAN PATENT APPLICATION

(11) **EP 1 248 209 A2**
(43) Date of publication of application: **09.10.2002**
(21) Application number: 02007072.8
(22) Date of filing: 27.03.2002
(51) Int. Cl.: G06F 17/30

(54) **Data processing apparatus for accessing web page data and method for processing web page data**

(30) Priority: 04.04.2001 JP 2001105956
(71) Applicant: Kabushiki Kaisha Toshiba, Tokyo (JP)
(72) Inventor: Hashimoto, Tatsuya, c/o Toshiba Corporation, Minato-ku, Tokyo (JP)
(74) Representative: Henkel, Feiler, Hänzel

(57) **Abstract**

Methods for easily designating URL data in handheld data processing apparatus are provided in order to reuse a desired URL data through a radio communication network. The method includes selecting a desired URL data by using a selection button during when a web page is displayed, and registering the URL data for the displayed web page and URL data for the selected link point.

## Description

### CROSS-REFERENCE TO RELATED APPLICATIONS

This application claims the benefit of priority from Japanese Patent Applications No. 2001-105956, filed on April 4, 2001. This application is hereby incorporated by reference in its entirety.

### BACKGROUND OF THE INVENTION

### Field of the Invention

The invention relates to a data processing apparatus for accessing scattered web page data through communication networks and methods for accessing the web page data on communication networks. More particularly, it relates to apparatus and methods for easily performing record and/or reproduction operations of URL data of the web pages to be reused in handheld data processing apparatus.

### Description of the Related Art

Recent wide spreads of personal computers (PC) and hand-held data processing apparatus, such as personal digital assistants (PDA) or mobile telephones increase users who desires to access scattered web page data on networks, such as Internet. In general, various kinds of web browser software corresponded to each communication systems are used to search and/or read such scattered data on the networks. For example, in order to access data through the Internet, the Internet Explorer is used as a browser software to search and/or read the scattered data on the world wide web (WWW) cites.

In case of perusing web cites by using web browser software, it is possible for a user to store a uniform resource locator (URL) of a particular web page in a memory for repeatedly reading the particular web page. For example, when the Internet explorer, a web browser software manufactured by Microsoft Corporation, U.S., is used, a user can memorize URL data of a particular web page by using a "favorite" function during when the particular web page is opened on a screen of a data processing apparatus, such as a personal computer.

Moreover, when a web page includes a particularly descried URL information (data) link, it also become possible to store the particular URL link point by clicking a mouse button for a data processing device during when a pointing cursor is positioned on the particular portion of character sequence indicating the URL data. For example, in case of a hyper text markup language (HTML), a tag for specifying a link is indicated. And an address of a link point is described at a head of the tag. Then, the character sequence encircled by this tag is registered as an anchor. In the web browser, a character sequence of the anchor is displayed with attaching a colored underline. Accordingly, the URL data for the link point is stored by clicking a right button in a mouse device during when a cursor is moved on the underlined character sequence.

Japanese Application Publication 11-265397, published September 28, 1999 discloses a technique for displaying a web page based on predetermined URL information that are memorized by pasting into a scrap book. The pasted URL information contains data regarding a link point described in the web page. A user can display the web page by indicating the memorized URL information in the scrap book.

Such techniques are applicable to data processing apparatus having a relative large sized display screen, such as personal computers (PCs). However, with comparing to PCs, hand-held data processing apparatus, such as a PDA or mobile telephones, usually includes a quietly small sized data display screen. Moreover, the hand-held data processing apparatus usually employs selection buttons or an input pen in order to select data. Thus, the selection button or the pen is used for inputting data. Consequently, various kinds of operations are required in order to access to data though the Internet on a small sized display screen.

Moreover, the PCs and the handheld data processing apparatus respectively employ a different kind of operation system (OS). The differences of the OS prevent the above-mentioned techniques for repeatedly using web page data from directly applying to the data processing apparatus having a relatively small sized display screen. Thus, it is impossible for the handheld data processing apparatus of a small sized display screen to apply the same techniques for the PCs.

Accordingly, one object of the invention is to provide apparatus and methods for easily reusing URL information of a particular web page on a small sized screen in a handheld data processing apparatus.

Another object of the invention is to provide apparatus and methods for easily designating URL information in a handheld data processing apparatus.

Further object of the invention is to provide apparatus and methods for easily registering URL information for a displayed web page and URL information for a link point indicated in the displayed web page.

### SUMMARY OF THE INVENTION

An embodiment of data processing apparatus consistent with the present invention includes a communication controller for performing communication on a network; a web page data memory for storing downloaded web page data on the network through the communication controller; a web page display for displaying web pages based on the web page data stored in the web page data memory; an indicator for indicating a specified portion on the web page displayed on the web display; and an address data memory for storing address data included in the web page data.

Another embodiment of the data processing apparatus consistent with the present invention includes, a web page data memory for storing web pages; a web page display for displaying a web page based on we page data stored in the web page data memory; a selector for selecting a specified portion on the web page displayed on the web display; and an address data memory for storing address data included in the web page data in accordance with the specified portion.

Further embodiment of the data processing apparatus consistent with the present invention includes, a web page data memory for storing web pages; a web page display screen for displaying a web page based on we page data stored in the web page data memory; a cursor button for pointing a cursor on the web page display screen, the cursor is displayed at least per line on the display screen; a registration instructing button for instructing registration of address data included in the displayed web page; a unit for acquiring address data included in the web page data at a position pointed by the cursor button, during when the registration instructing button is operated; and an address data memory for storing the acquired address data.

Still further embodiment of the method for processing data, consistent with the present invention includes downloading data of a web page on a network through a radio communication; storing the downloaded web page data into a web page data memory; displaying the web page based on the stored web page data in the web page data memory; indicating a specified portion on the web page displayed on the display web page; and storing address data included in the indicated specified portion of the web page as a registration data.

### BRIEF DESCRIPTION OF THE DRAWINGS

A more complete appreciation of the present invention and its many attendant advantages thereof will be readily obtained as the same better understood by reference to the following detailed description when considered in connection with the accompanying drawings wherein:

Figure 1 is an exemplary configuration of an embodiment of handheld data processing apparatus in which methods and apparatus consistent with the present invention may be implemented.

Figure 2 is a block diagram of an exemplary composition for mainly performing recording and reproducing operations of URL data in the data processing apparatus shown in Figure 1.

Figure 3 is a flowchart explaining a URL data registering operation.

Figure 4 is a flowchart showing a displaying routine of a web page.

Figure 5 illustrates an example of a predetermined web page displayed on an LCD screen of the display/input unit by driving the web browser software shown in Figure 2.

Figure 6 illustrates an example state of that an active cursor is moved on a specified line of the web page shown in Figure 5 where the active cursor is moved up and down on the web page displayed on an LCD screen by operating a selection button in the data processing apparatus shown in Figure 1.

Figure 7 illustrates an example state where a sub-menu is displayed on the web page shown in Figure 5 in which the active cursor is moved on a specified line displaying a linked data.

Figure 8 illustrates an example state where the sub-menu in Figure 7 on the web display screen is opened by selecting the first function button in the data processing apparatus shown in Figure 1 during when the active cursor is positioned on a specified line including no link data has designated.

Figure 9 illustrates an example of memory contents stored in the URL data memory.

Figure 10 illustrates an example of source data for displaying a web page showing in Figure 5.

Figure 11 illustrates an example for displaying a state where a simple registration URL menu is displayed on a web page.

Figure 12 illustrates an example state of the URL registration where an input gesture is used for performing the registration.

Figure 13 illustrates another exemplary configuration of a mobile telephone consistent with the present invention.

Figure 14 illustrates another example of contents displayed in a web page in the mobile telephone shown in Figure 13.

Figure 15 illustrates an example state of the web page shown in Figure 14 in which a specific portion is selected.

### DETAILED DESCRIPTION

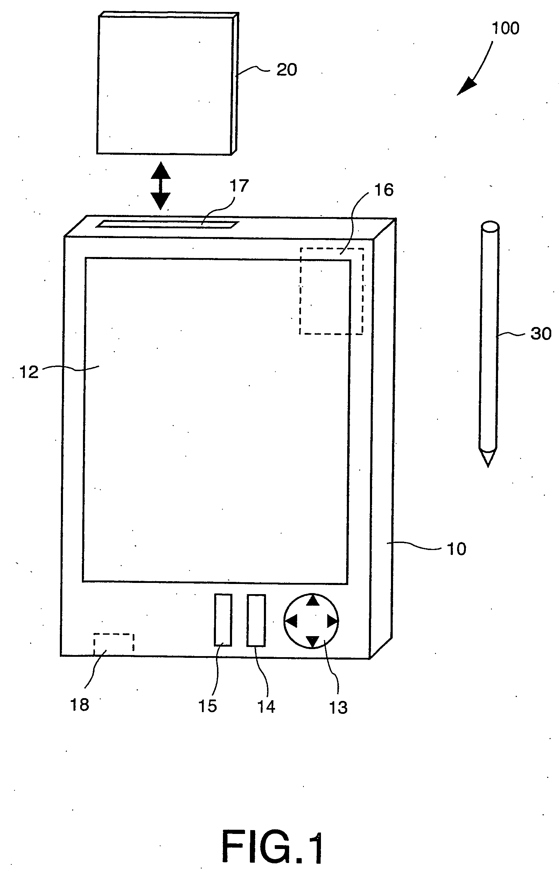

Figure 1 is a block diagram illustrating an exemplary embodiment of a data processing apparatus 100 in accordance with methods and apparatus consistent with the invention. The data processing apparatus 100 comprises a main body 10, a memory medium 20 and a pen member 30.

The main body 10 includes a display/input unit 12, a selection button 13, a first function button 14, a second function button 15, a communication module 16, an interface unit 17, and an outer power supply plug unit 18. The display/input unit 12 includes a liquid crystal display (LCD) for displaying various data and a tablet unit for inputting data. The selection button 13 is used for selecting data and for moving a cursor. The first function button 14 is used to set up a URL simple registration function. The second function 15 is used to set up another function.

The memory medium 20 is used for storing URL data and web page data. The pen member 30 is used for inputting data through the display/input unit 12. The communication module 16 is used for a radio communication, such as Bluetooth. The interface unit 17 is used for mounting the memory medium 20 into the main body 10.

In this embodiment of data processing apparatus consistent with the invention, the tablet unit in the display/input unit 12 adopts a pressure sensitive system for detecting position coordinates data of the display unit 12 inputted by the input pen 30. Of course, it is possible to adopt an electrical capacitance system for the tablet and the input pen 30.

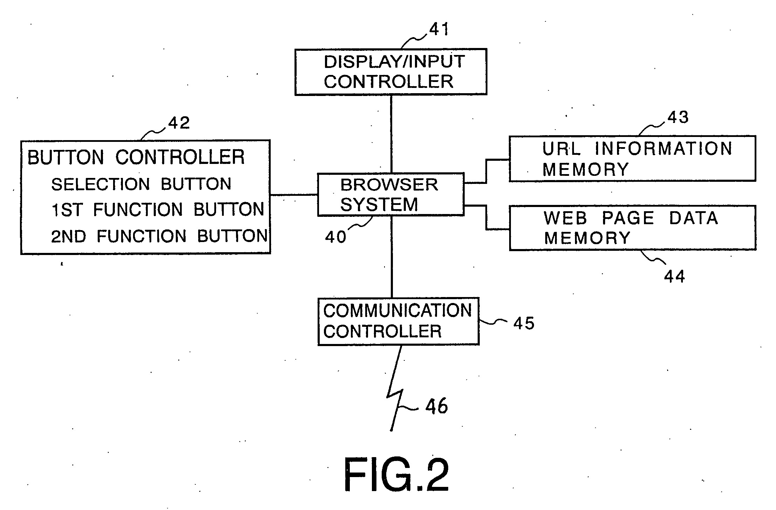

Figure 2 is a block diagram of an exemplary composition for mainly performing recording and reproducing operations of URL data (information) in the data processing apparatus shown in Figure 1. Thus, data processing apparatus 100 includes a browser system 40, a display/input controller 41, a button controller 42, a URL data (information) memory 43, a web page data memory 44, and a communication controller 45.

The browser system 40 controls whole operations for browsing web data. The display/input controller 41 performs input or out operations of data on the display/input unit 12. The button controller 42 controls data that is respectively supplied from the selection button 13, the first and second function buttons 14 and 15. The URL data memory 43 stores URL data that is specified to be registered by a user. The web page data memory 44 stores source data for the web page. The communication controller 45 controls input/output operations of data acquired through a radio communication 46.

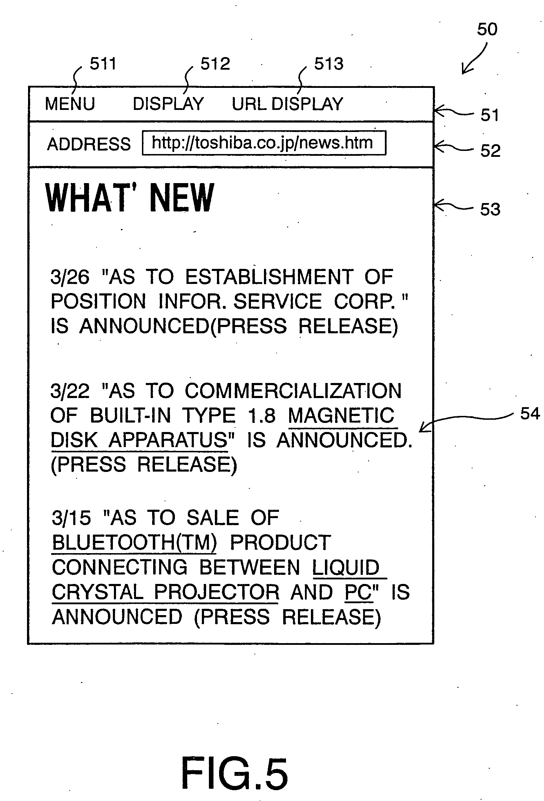

With referencing to an example of a predetermined web page displayed on the LCD screen 12 in the data processing apparatus 100, practical operations for registering the URL information will be explained. By activating a browser software in the browser system 40, the communication controller 45 accesses to a predetermined web page through the radio communication 46 and a display, such as illustrated in Figure 5 is displayed on the LCD screen at an initial stage.

As illustrated in Figure 5, a web page 50 displayed on the screen 12 includes a menu area 51, an address area 52, and a page area 53. The menu area 51 displays various kinds of menus, such as a menu 511, a display 512, and a URL display 513. The address area 52 displays a URL data for the displayed web page 50. The page area 53 displays contents of the web page 50. The web page data includes underlined portions 54, 55 as link data. The link data indicate another web pages linked to the displayed web page 50. Thus, by respectively clicking the linked portions, the web page screen is changed to another linked web page by automatically switching the URL for another web page.

Thus, browser system 30 downloads source data for a web page from a indicated position by the particular URL and stores the source data to the web page data memory 34. In accordance with the downloaded source data, browser system 30 displays the particular address for the web page onto the address display area 52. Further, data based on the source data is displayed at the page area 53. In this case, if the character data described as one line by HTML cannot be displayed in one line, a display line is suitably turned up and is displayed in accordance with the size of the page area 53. As explained above, the under lined portions 54, 55 indicate that a corresponding URL linked to another web page. In Figure 5, the link point is setup by underlining against the character sequence. Of course, it is possible to setup the link point against image data.

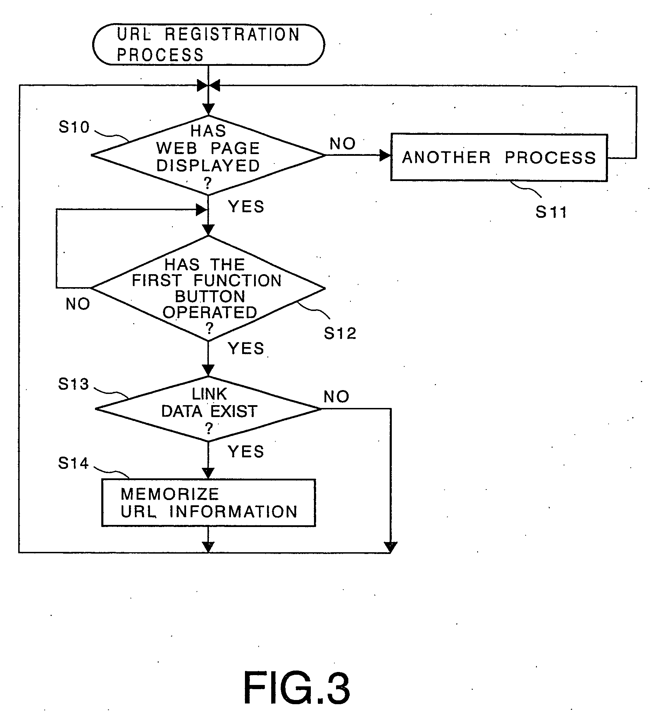

Figure 3 explains a registering process for specified URL data. Firstly, the browser system 40 in the data processing apparatus 100 distinguishes whether a web page has been displayed on the display/input unit 12 through the communication module 16 (step S10). If it distinguishes that a web page has not yet displayed on the display/input unit 12 (step S10, NO), the browser system 40 performs another process (step S11). If the browser system 40 distinguishes that a web page has been displayed on the display/input unit 12 (step S10, YES), the process proceeds to step S12 for judging whether the first function button 14 for setting up a URL simple registration function is operated during the web page displaying status (step S 12). If the first function button 14 has not operated (step S12, NO), the process goes back without any particular operation. On the contrary, if the first function button 14 has been operated during the web page displaying status (step S12, YES), the process confirms whether or not the presently displayed web page includes any linked data associated to the URL link information at a pointed position by an active cursor (step S13). If no associated link data exist (step S13, NO), the process goes back to step S10. If some associated link data is confirmed at the position indicated by the active cursor (step S13, YES), both of presently displayed URL data and linked URL data are stored in URL data memory 43 with attaching registration time information and comments (step S14).

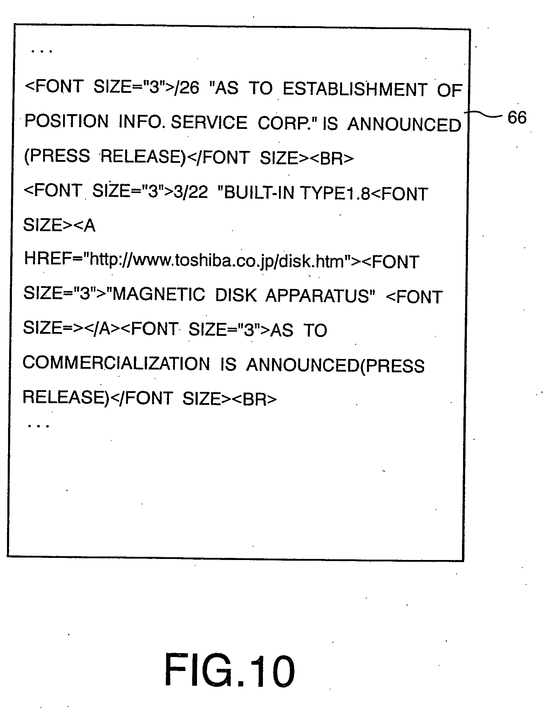

The source data for the web page is comprised of data described by a language, for example, describing a hyper text, such as HTML. Figure 10 illustrates an example of the source data 66 for a web page 50. Thus, based on the source data stored in the web page data memory 44, the browser system 40 can distinguish whether link data is setup at a particular position in a displayed screen by moving an active cursor up and down by using the selection button 13. Thus, based on the source data stored in the web page data memory 44, the browser system 30 can judge whether some link data is designated at arbitrary positions in a displayed screen. The designation of link data is performed with moving an active cursor at arbitrary positions in the displayed screen by using the selection button 13. Of course, it is possible to store source data 66 for web pages in a memory for the data processing apparatus 100, such as a semiconductor memory or a magnetic disk apparatus, in order to shorten the access time for reproducing source data. Further, it is possible to store the source data in a memory of a relative small capacity by taking out the source data from a network at every access time to web pages.

Next, with referencing to displayed contents on a screen, a practical registration operation of URL data is explained. At an initial stage where a predetermined web page is accessed by activating browser software, a screen, for example, as shown in Figure 5 is displayed on the LCD display. The browser software 40 downloads source data from a position indicated by a predetermined URL. The downloaded source data is stored in the web page data memory 44. In accordance with the downloaded source data, the browser performs a display of address corresponded to the web page at address area 52. Further, data based on the source is displayed at page area 53.

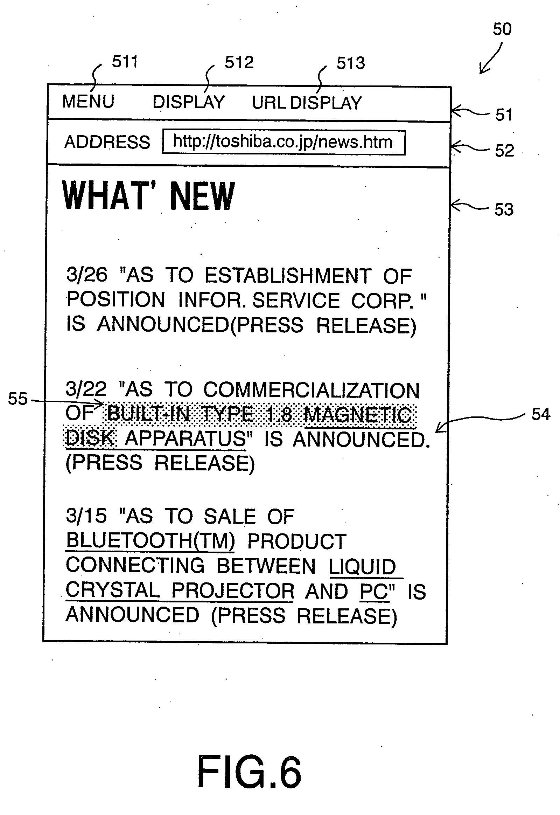

Figure 6 shows an example state where an active cursor is moved on a predetermined line of a web page by operating the selection button 13 in up and down directions. In this embodiment, the active cursor 55 is represented so as to that a net credit display of one line in the page display area 53 is carried out. Of course, it is possible to carry out character decoration network credit display for one line range by using source data. Further, it is possible to distinguish the credit display from other portions by carrying out, such as reversal white of the character.

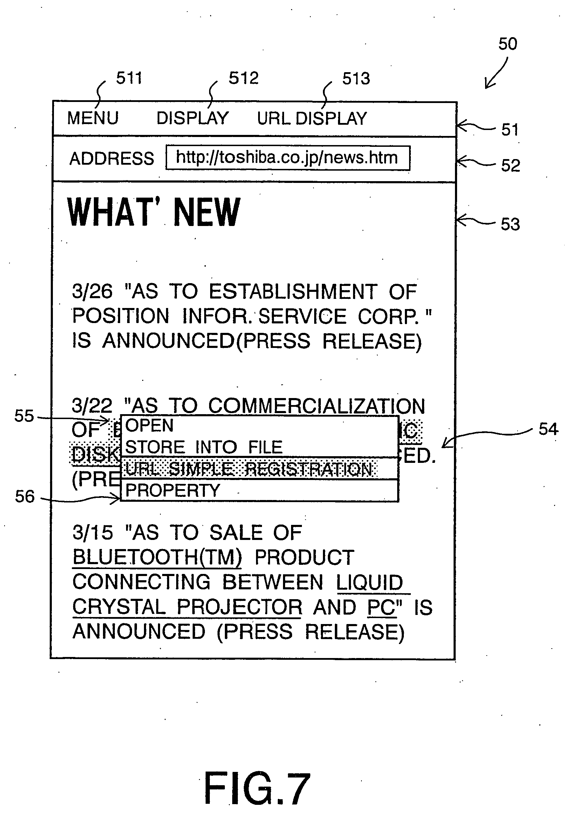

When the first function button 14 is pushed during the state where the active cursor 55 is displaying at a predetermined position in the page display area 53, a sub-menu screen 56 is displayed around the active cursor 55, such as illustrated in Figure 7. At this state, a user can select various kinds of menus displayed in the sub-menu screen 56 by moving menu selection cursor with operating the up and down button in the selection button 13. In this example, a URL simple registration menu in the sub-menu screen 56 is selected by fitting the menu selection cursor on the sub-menu. During this sub-menu selection state, the sub-menu is driven when the first function button A14 is also pushed. In this example, the URL simple registration process is driven for performing registration of URL data.

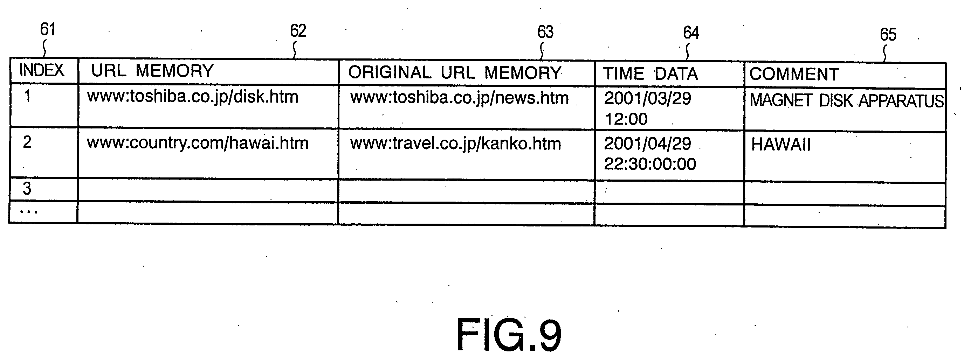

The URL simple registration is performed by storing data into URL data memory 43 in a format, such as shown in Figure 9. Thus, the URL data memory 43 includes an index memory area 61, a URL memory area 62, an original URL memory area 63, time data memory area 64, and comment memory area 65 for performing the URL simple registration. When the registration is performed at a first time, it is performed at the first position areas arranged along the number 1 in the index memory area 61. Thus, the URL data for the presently displayed web page is stored in the original URL memory area 63. Further, based on the position of the active cursor, a corresponded URL data is specified from the source data, and the specified URL data is stored in the URL memory area 62. As to date information for the URL simple registration is stored in the time data memory area 64. Further, the character sequence displayed in the web page to be registered as URL data, is stored comment memory area 65 as comment data. Of course, it is possible to input the comment data. If a plurality of link data exists at the selected active cursor position, it is possible for a user to keep desired URL data only by displaying the list of corresponded link data on a screen.

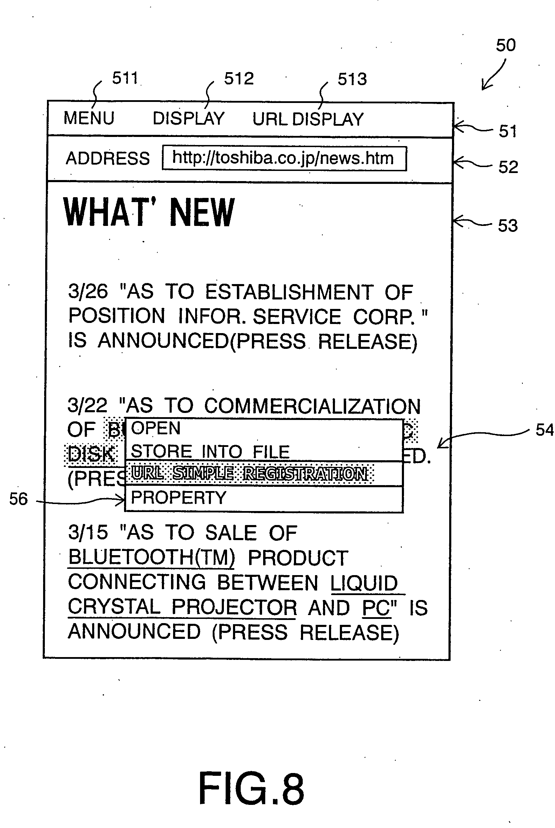

Figure 8 shows an exemplary state where the sub-menu screen 56 is opened by selecting the function button 14 during when the active cursor is placed on a portion where the link data has not yet setup. When link data does not setup in the source data at the active cursor position, the menu portions of the URL simple registration for the sub-menu screen 56 is displayed gray. Even if the first function button 14 is operated under this state, the URL data registration process is not performed.

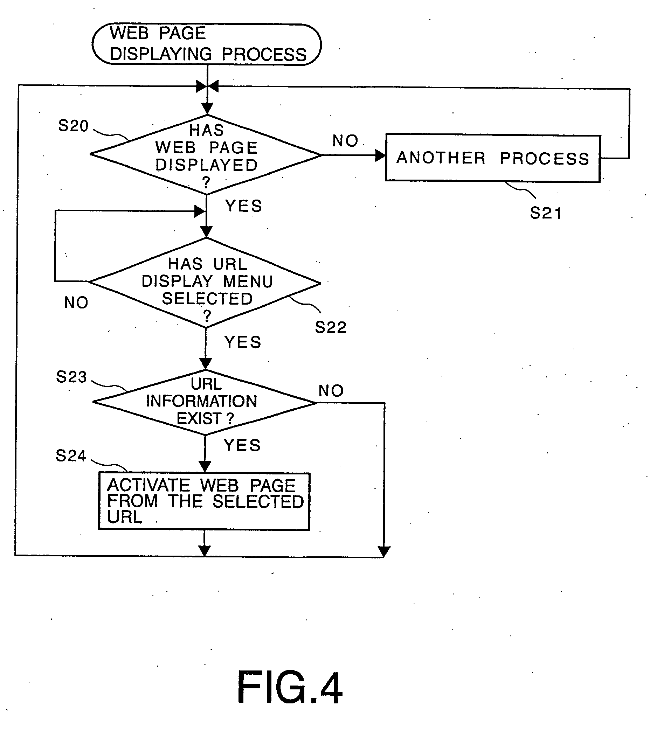

Figure 4 shows a process for displaying web page based on registered URL data. At first, browser system 40 in the data processing apparatus 100 distinguishes whether a web page has been displayed on the display/input unit (step S20). If a web page has not displayed on the display/input unit (step S20, NO), the browser system 40 performs another process (step S21). If a web page has been displayed (step S20, YES), the process goes a next step for judging whether a URL display menu has been selected from a menu display area 51 in the display as shown in Figure 5 (step S 22). This process is repeated until URL display menu is selected. In a state where the URL display menu is selected, it is judged whether the URL data is stored in the URL data memory 43 (step S23). If the URL data is not registered, the process goes to step S20. If the URL data is registered, the process goes to step S24. Thus, if the URL data is registered, the list of the registered URL data is displayed in order to select some URL data by using the selection button 13. Based on the selected URL data, source data concerning web page is downloaded through a network, and the web page is displayed (step S24).

If the URL display menu has not been selected (step S22, NO), the process goes back without any particular operation. If the URL display menu has been selected (step S22, YES), the process goes to confirm whether any URL data exist in the web page (step S23). If there is no URL data (step S23, NO), the process goes back to step S20. If any URL data exist (step S23, YES), the web page is activated from the selected URL data (step S24).

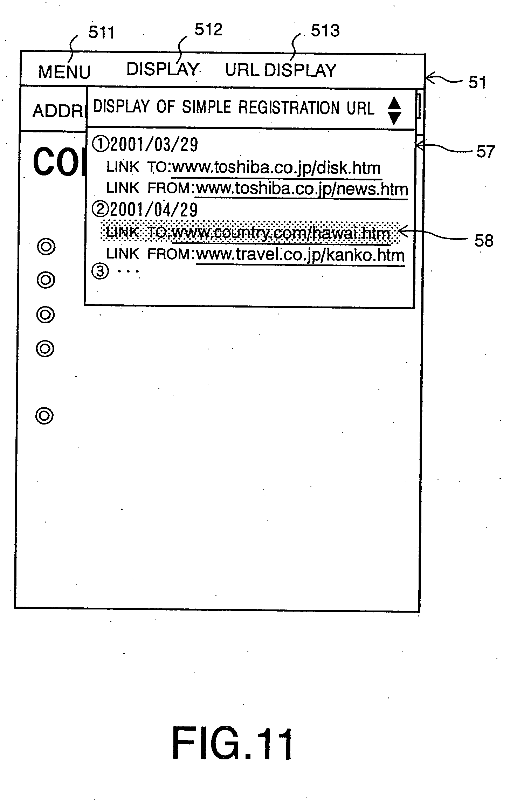

Figure 11 illustrates an example of a display of the simple registration URL. When the URL display menu 513 is selected in the menu area 51 of the web page 50, a list screen 57 for the registered URL data is displayed near to the URL display menu 513. URL data list screen 57 is displayed based on the data stored in the URL data memory 33. In this example URL data list screen 57 of the embodiment, URL data of link addressee memorized in the URL memory area 62 and URL data of link addressor memorized in the original URL memory area 63 are displayed with its stored date in the memorized order. In the URL data list screen 57, it can select desired link data by using up and down button in the selection button 13. In this embodiment, the selected link data is shown in a net credit. During when the selection cursor is displayed on a desired link data, the first function button 14 is operated in order to acquire URL data corresponded to the selection cursor from the URL data memory 33. Based on the acquired URL data, a web page is displayed. When there are too many registered URL data which cannot display at once, it can display by scrolling with the selection button 13.

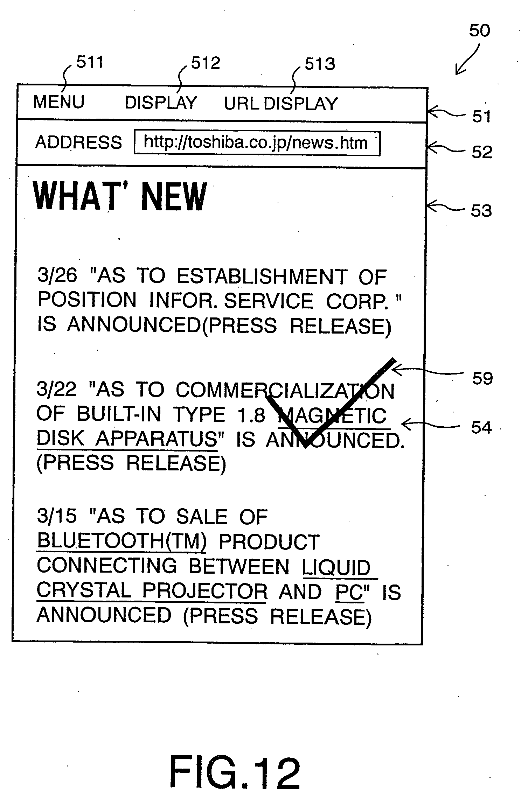

In the above-mentioned embodiments, URL data is registered by operating the selection button 13 in order to select a desired position in a web page with. However, the registration of URL data may also perform by another method. As shown in Figure 12, it can select a desired portion by using an input pen 30. In this case, it is also possible to perform the URL data registration by using so-called gesture function. The gesture function is performed a predetermined process by recognizing an inputted pen form with comparing to preliminary registering pen forms. In Figure 12, the page display screen 53 includes a gesture 59 for representing URL simple registration. Thus, a user input the gesture 59 by using the input pen 30. In case of inputting by using the input pen 30, it is difficult to select desired character sequences, since the page display area 53 in the display/input unit 12 is rather small. By using the gesture function, it becomes possible to register URL data by selecting desired URL data even if the inputted pen form straddles over a plurality of lines.

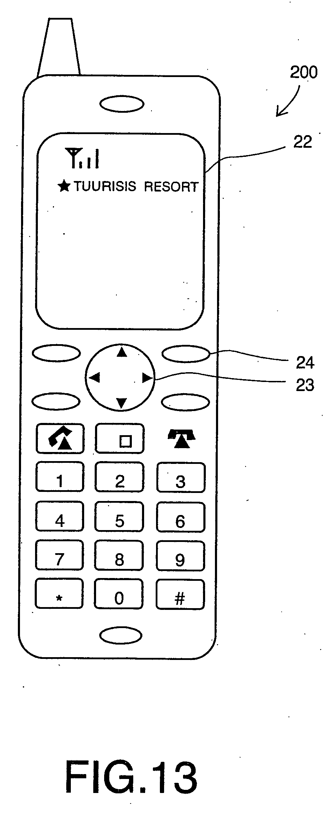

The URL data registration process consistent with the invention is applicable to a mobile telephone having a still small display area. Thus, a mobile telephone is used as a second embodiment of the data processing apparatus consistent with the invention. As illustrated in Figure 13, a display area 22 for a present mobile phone 200 can display only about 100 characters. Moreover, various data selections can perform only by using a selection button 23. A function button 24 is used for performing URL data registration.

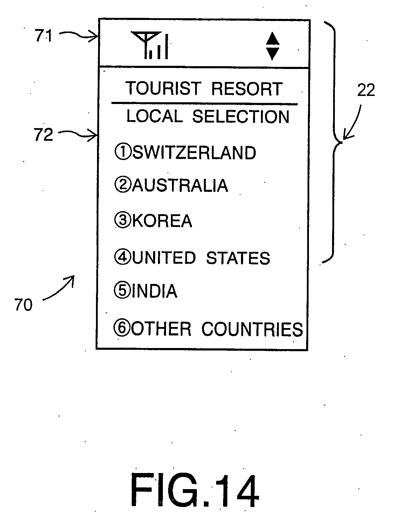

Figure 14 is an example display data 70 in the display screen 22. The display data 70 includes a system display area 71, and a page display area 72. The system display area 71 represents communication status. The page display area 72 represents a web page. If the display data 70 is not displayed in a visible range of the display screen 22, the remaining data can be displayed by scrolling up and down with the selection button 23. Each contents currently displayed in the screen 22, each link data is matched, respectively.

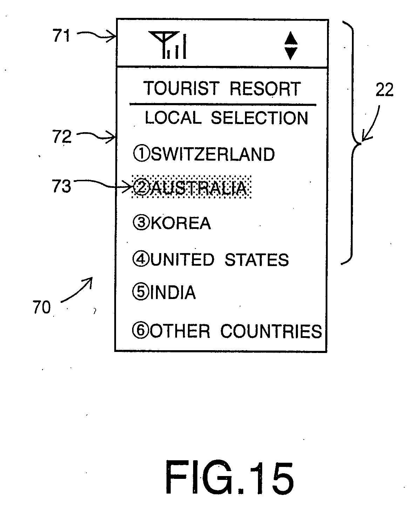

As illustrated in Figure 15, a selection cursor 73 is positioned on a desired specific choice 73 by moving with up and down button in the selection button 13. Further, by operating the function button 24 for performing a specific URL data registration, the URL data corresponded to the choice is stored into URL data memory.

As explained above, according to the invention, a user can select a desired URL data displaying portion by using a selection button during when a web page is displayed on a screen. Moreover, an operation of a function button performs a simple URL data registration by registering both URL data of the web page and URL data of link point.

Other embodiments of the present invention will be apparent to those skilled in the art from consideration of the specification and practice of the invention disclosed herein. It is intended that the specification and examples be considered as exemplary only, with a true scope and sprit of the invention being indicted by the following claims.

## Claims

1. A data processing apparatus, comprising:
a communication controller for performing communication on a network;
a web page data memory for storing downloaded web page data on the network through the communication controller;
a web page display for displaying web pages based on the web page data stored in the web page data memory;
an indicator for indicating a specified portion on the web page displayed on the web display; and
an address data memory for storing address data included in the web page data.

2. The data processing apparatus according to claim 1, further comprising:
a selector for selecting a particular address data from the address data stored in the address data memory; and
a URL display for displaying the downloaded web pages through the communication controller based on the selected address data.

3. The data processing apparatus according to claim 1, wherein:
the address data memory stores address data included in the specified portion and address data in the presently displayed web page.

4. A data processing apparatus, comprising:
web page data memory for storing web pages;
a web page display for displaying a web page based on we page data stored in the web page data memory;
a selector for selecting a specified portion on the web page displayed on the web display; and
an address data memory for storing address data included in the web page data in accordance with the specified portion.

5. A data processing apparatus, comprising:
a web page data memory for storing web pages;
a web page display screen for displaying a web page based on we page data stored in the web page data memory;
a cursor button for pointing a cursor on the web page display screen, the cursor is displayed at least per line on the display screen;
a registration instructing button for instructing registration of address data included in the displayed web page;
a unit for acquiring address data included in the web page data at a position pointed by the cursor button, during when the registration instructing button is operated; and
an address data memory for storing the acquired address data.

6. The data processing apparatus, according to claim 5, further comprising:
an instruction unit for storing address data into the address memory, if the address data is included in the web page data at a position of the cursor button during when a registration is instructed by the registration instructing button, and for displaying a notice that the address data cannot be stored, if the address data is included in the web page data at a position of the cursor button during when a registration is instructed by the registration instructing button.

7. The data processing apparatus, according to claim 5, further comprising:
a communication controller for performing communication on a network; whereby
the web page data memory stores the web page data on the network downloaded by the communication controller.

8. The data processing apparatus, according to claim 6, further comprising:
a communication controller for performing communication on a network; whereby
the web page data memory stores the web page data on the network downloaded by the communication controller.

9. The data processing apparatus, according to claim 7, further comprising:
a selector for selecting a particular address data from the address data stored in the address data memory; and
a URL display for displaying a web page downloaded through the communication controller based on the selected address data.

10. The data processing apparatus, according to claim 5, wherein:
the address data memory stores an address data included in the selected portion and address data included in the presently displayed web page.

11. The data processing apparatus, according to claim 6, wherein:
the address data memory stores an address data included in the selected portion and address data included in the presently displayed web page.

12. A method for processing data, comprising:
downloading data of a web page on a network through a radio communication;
storing the downloaded web page data into a web page data memory;
displaying the web page based on the stored web page data in the web page data memory;
indicating a specified portion on the web page displayed on the display web page; and
storing address data included in the indicated specified portion of the web page as a registration data.

13. The method for processing data according to claim 12, further comprising:
selecting a particular address data from the stored address data;
downloading web page data through a network based on the selected particular address data; and
displaying a web page on a screen based on the downloaded web page data.

14. The method for processing data according to claim 12, further comprising:
storing both address data included in the indicated particular portion and address data on the displayed web page, as registration data.

15. The method for processing data according to claim 12, further comprising the step of:
indicating address data included in web page data on the displayed screen;
acquiring address data included in the web page data corresponding to a position of an active cursor in the displayed web page; and
storing the address data as registration data.
